# EUROPEAN PATENT SPECIFICATION

(11) **EP 4 067 992 B1**
(45) Date of publication and mention of the grant of the patent: **20.03.2024**
(21) Application number: 20894144.3
(22) Date of filing: 01.07.2020
(51) Int. Cl.: G03B 17/55, G03B 17/56, H04N 23/52

(54) **CAMERA**
KAMERA
CAMÉRA

(30) Priority: 27.11.2019 CN 201911179763
(43) Date of publication of application: 05.10.2022
(73) Proprietor: Hangzhou Hikvision Digital Technology Co., Ltd., Hangzhou, Zhejiang 310051 (CN)
(72) Inventor: ZOU, Jiguang, Hangzhou, Zhejiang 310051 (CN); ZHOU, Bin, Hangzhou, Zhejiang 310051 (CN); YE, Zhan, Hangzhou, Zhejiang 310051 (CN)
(74) Representative: Epping - Hermann - Fischer
(86) International application number: PCT/CN2020/099730
(87) International publication number: WO 2021/103529

(56) References cited:
- CN-A- 102 647 885
- CN-A- 102 854 714
- CN-A- 109 817 106
- CN-U- 204 374 837
- CN-U- 208 015 860
- CN-Y- 2 769 980
- JP-A- 2000 082 347
- JP-A- 2019 050 418
- JP-B2- 6 573 166
- US-A1- 2018 191 967

## Description

The present invention claims the priority to a Chinese patent application No. 201911179763.6, filed with the China National Intellectual Property Administration on November 27, 2019 and entitled "CAMERA".

### TECHNICAL FIELD

The present disclosure relates to the temperature control technology of a camera, in particular to a camera with a movable heating element.

### BACKGROUND

A camera is often provided with heating elements such as an imaging component inside its casing. These heating elements will generate a large amount of heat during operation, and the heat may be dissipated through heat exchange between the casing and the outside. However, if the heat generated by the heating elements cannot be efficiently exchanged to the casing, no matter how the heat exchange efficiency of the casing to the outside is improved, the temperature control effect of the heating element cannot be improved.

With the increasing demand of various intelligent applications, the forms of cameras are becoming more and more diverse. The heating elements in some cameras can move relative to the casing. For this kind of camera, the heat generated by the heating elements can only be exchanged to the casing by disordered flow taking air as the carrier, but the exchange efficiency of this heat exchange method is low, resulting in poor temperature control effect of the heating elements.

CN208015860U involves discloses a camera with a heat dissipation device, which comprises a camera device body, a protective cover and a mounting seat, wherein the bottom end of the camera device body is fixedly connected with the mounting seat, the top of the mounting seat is tightly welded with the protective cover mounting seat, the top of the protective cover mounting seat is movably connected with a rotating shaft, the top of the rotating shaft is fixedly connected with an organism, and the left and right sides of the body are tightly welded with cooling liquid storage box placing plates. The top of the cooling liquid storage box placing plate is fixedly connected with a cooling liquid storage box, and the top of the cooling liquid storage box is fixedly connected with a conveying motor. If the heat is high and the cooling hole cannot dissipate heat in time, the conveying motor will operate to convey the cooling liquid in the cooling liquid storage box through the conveying pipe and flow through the camera body for physical cooling, so as to prevent the camera body from being damaged due to overheating, and effectively improve the security of the camera device body.

### SUMMARY

There is provided a camera according to claim 1. Optional features are set out in the dependent claims.

### BRIEF DESCRIPTION OF THE DRAWINGS

In order to explain the embodiments of the present disclosure and the technical solutions of the prior art more clearly, the drawings used in the embodiments and the prior art will be described briefly in the following, and it is apparent that the drawings in the description below are only some embodiments of the present disclosure and those skilled in the art can obtain other drawings according to these drawings without inventive efforts.
FIG. 1 is a schematic diagram of an exemplary structure of a camera in an embodiment of the present disclosure;
FIG. 2 is a schematic diagram of an exemplary internal structure of a camera in a comparative example;
FIG. 3 is a schematic diagram of a first example structure of the camera shown in FIG. 1;
FIG. 4 is a schematic diagram of an example of an electrical architecture suitable for the first example structure shown in FIG. 3; and
FIG. 5 is a schematic diagram of a second example structure of the camera shown in FIG. 1.

### Reference numeral:

10 - casing;
   11 - casing base;
   12 - casing cover;
20 - heating element;
30 - transmission assembly;
   31- base;
   32 - rotating shaft;
40 - temperature control assembly;
41- first heat exchange part;
   411- first thermally conductive interface layer;
   412 - first heat exchanger;
      412a - first pipe interface;
      412b - first rigid clamp;
      412c - first flexible clamp;
      412d - first clamp bracket;
   413 - Peltier element;
42 - second heat exchange part;
   421 - second thermally conductive interface layer;
   422 - second heat exchanger;
      422a - second pipe interface;
      422b - second rigid clamp;
      422c - second flexible clamp;
      422d second clamp bracket;
43 - flexible liquid flow pipeline;
   431- upstream flexible pipe;
   432 - downstream flexible pipe;
44 - liquid supply driving element;
51 - thermosensitive switch element;
52 - thermosensitive current limiting element;
90 - fan.

### DETAILED DESCRIPTION OF THE INVENTION

The objectives, solutions and advantages of the present disclosure will be clearer from the following detailed description in conjunction with the drawings and embodiments of the present disclosure. Obviously, the embodiments described are only part of the embodiments of the present disclosure, not all of them.

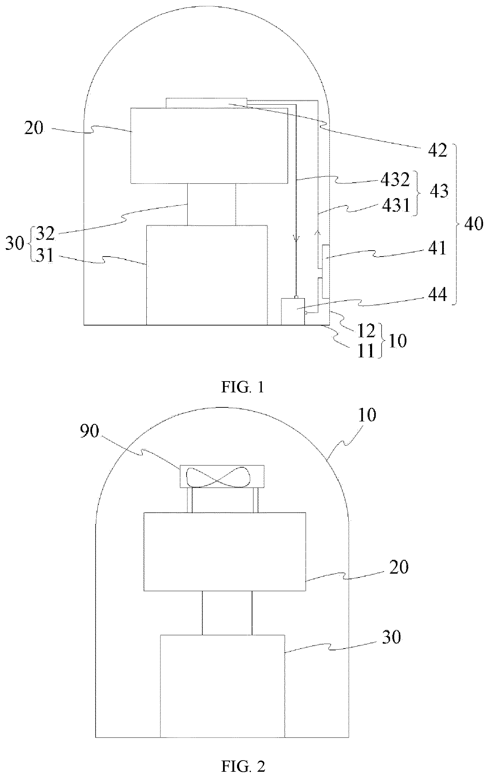

FIG. 1 is a schematic diagram of an exemplary structure of a camera in an embodiment of the present disclosure. Referring to FIG. 1, in the embodiment, the camera includes:
a casing 10;
a heating element 20, which is movably (translationally and/or rotationally) installed inside the casing 10 through a transmission assembly 30;
a temperature control assembly 40, which is located inside the casing 10 and forms between the heating element 20 and the casing 10 a flexible heat exchange loop based on liquid medium circulation;
wherein the flexible heat exchange loop based on liquid medium circulation has a deformation allowance for bending responsive to a change in a relative position between the heating element 20 and the casing 10.

Based on the above structure, for the camera in which the heating element 20 can move relative to the casing 10, the temperature control assembly 40 can form a flexible heat exchange loop between the heating element 20 and the casing 10.

Since the flexible heat exchange loop can realize the heat exchange from the heating element 20 to the casing 10 based on the liquid medium circulation, it has higher exchange efficiency compared with the heat exchange taking air as the carrier. Also, since having a deformation allowance for bending responsive to the change in the relative position between the heating element 20 and the casing 10, the flexible heat exchange loop will not interfere with the relative movement between the heating element 20 and the casing 10.

Moreover, since the temperature control assembly 40 forming the flexible heat exchange loop can be integrally arranged inside the casing 10, it is not necessary to arrange an external liquid supply pipeline for the liquid medium outside the casing 10.

In one embodiment, the temperature control assembly 40 includes a flexible liquid flow pipeline filled with a liquid medium, and a loop is formed through the flexible liquid flow pipeline filled with a liquid medium to guide the heat of the heating element 20 to the casing 10 for heat dissipation. In one implementation, the flexible liquid flow pipeline can be filled full with liquid medium.

In one embodiment, as shown in FIG. 1, it is an example where the casing 10 may include a casing base 11 and a casing cover 12 installed above the casing base 11, and the heating element 20 may be supported above the casing base 11 by the transmission assembly 30 in a flat-rotatable manner.

In one embodiment, the transmission assembly 30 may include a base 31 fixedly installed to the casing base 11, and a rotating shaft 32 installed above the base 31 in a rotatable manner. Correspondingly, the heating element 20 can be fixedly installed on the top end of the rotating shaft 32, so that as the rotating shaft 32 rotates, the heating element 20 can flat rotate above the casing base 11.

In one embodiment, the heating element 20 may include an imaging part.

In one embodiment, as shown in FIG. 1, the temperature control assembly 40 forming the flexible heat exchange loop includes: a first heat exchange part 41, a second heat exchange part 42, a flexible liquid flow pipeline 43, and a liquid supply driving element 44 (e.g., pump).

The first heat exchange part 41 is in thermally conductive contact with the casing 10. The first heat exchange part 41 is in thermally conductive contact with the casing 10 by being attached to the casing cover 12.

The second heat exchange part 42 is in thermally conductive contact with the heating element 20. The second heat exchange part 42 is in thermally conductive contact with the heating element 20 by being attached to a temperature control surface on the top of the heating element 20.

The flexible liquid flow pipeline 43 forms the aforementioned flexible heat exchange loop taking the first heat exchange part 41 and the second heat exchange part 42 as series nodes, and the flexible liquid flow pipeline 43 has a redundant length for providing the deformation allowance for the flexible heat exchange loop.

For example, referring to FIG. 1, the flexible liquid flow pipeline 43 may include an upstream flexible pipe 431 and a downstream flexible pipe 432. The upstream flexible pipe 431 and the downstream flexible pipe 432 may be made of a flexible material, and the flexible material may be plastic or rubber, but not limited to this.

Herein, the upstream flexible pipe 431 is used to supply the low-temperature liquid medium being heat dissipated by the casing 10 from the first heat exchange part 41 to the second heat exchange part 42 to form a liquid supply branch in the flexible heat exchange loop, and the downstream flexible pipe 432 is used to discharge the high-temperature liquid medium absorbing heat from the heating element 20 from the second heat exchange part 42 to the first heat exchange part 41 to form a discharge liquid branch in the flexible heat exchange loop.

The redundant length of the flexible liquid flow pipeline 43 can be considered as a reserved pipe length of the flexible liquid flow pipeline 43 between the first heat exchange part 41 and the second heat exchange part 42, which satisfies that the flexible liquid flow pipeline 43 is not subjected to tensile stress within the stroke range of the heating element 20 moving relative to the casing 10.

The liquid supply driving element 44 may include a power element, such as a pump, capable of driving the flow of the liquid medium. The liquid supply driving element 44 can be connected in series in a closed-loop circulation circuit, and the liquid supply driving element 44 can be fixedly installed to the casing base 11. In addition, the start-stop status and the operating rotation speed of the liquid supply driving element 44 may be electronically controlled or temperature-controlled.

FIG. 2 is a schematic diagram of an exemplary internal structure of a camera in a comparative example. Referring to FIG. 2, in a comparative example, the camera utilizes a fan 90 rigidly installed to the heating element 20 to achieve temperature control, so as to utilize the fan 90 to accelerate the flow of the air, to improve heat exchange efficiency. However, there will be the following problems.

Firstly, the heat dissipation of the fan 90 cannot change the manner of exchanging taking the air as the carrier. Although the fan 90 can accelerate the flow of the air, the heat exchange efficiency cannot be substantially improved due to the excessive thermal resistance of the air.

Secondly, if the heating element 20 includes an imaging part, due to the rigid connection between the fan 90 and the heating element 20, the high-frequency rotation of the blades of the fan 90 will cause the vibration of the heating element 20, which will in turn cause the imaging part to vibrate, resulting in a slight jitter of the image outputted by the imaging part.

Furthermore, that the fan 90 utilizes air as the carrier for heat dissipation will expand the diffusion range of the heat in the casing 10, generated by the heating element 20, which may affect other temperature sensitive components in the casing10, such as sensors.

In addition, the fan 90 cannot adapt to a narrow space a with special shape, and the fan 90 needs to occupy a large regular installation space in the casing 10. Therefore, the comparative example shown in FIG. 2 is not conducive to the miniaturized design of the camera.

Comparing the embodiment shown in FIG. 1 with the comparative example shown in FIG. 2:
firstly, the temperature control assembly 40 in the embodiment shown in FIG. 1 utilizes a liquid medium to achieve heat exchange, and thus has a higher exchange efficiency;
secondly, the temperature control assembly 40 in the embodiment shown in FIG. 1 may not include high-frequency moving components rigidly connected to the heating element 20, thus it is less likely to cause unnecessary vibration to the heating element 20;
furthermore, the temperature control assembly 40 in the embodiment shown in FIG. 1 can transfer heat in an orderly manner through the flexible heat exchange loop, and will not cause disorderly diffusion of the heat generated by the heating element 20;
in addition, the various parts of the temperature control assembly 40 in the embodiment shown in FIG. 1 can be installed dispersedly, and the flexible liquid flow pipeline 43 therein can be easier to adapt to the narrow space with the special shape than the fan 90, thus the temperature control assembly 40 does not need to occupy a relatively large regular installation space, which is conducive to the miniaturized design of the camera.

In order to better understand the deployment mode and operating principle of the temperature control assembly 40 in the camera, detailed descriptions will be provided in conjunction with examples below.

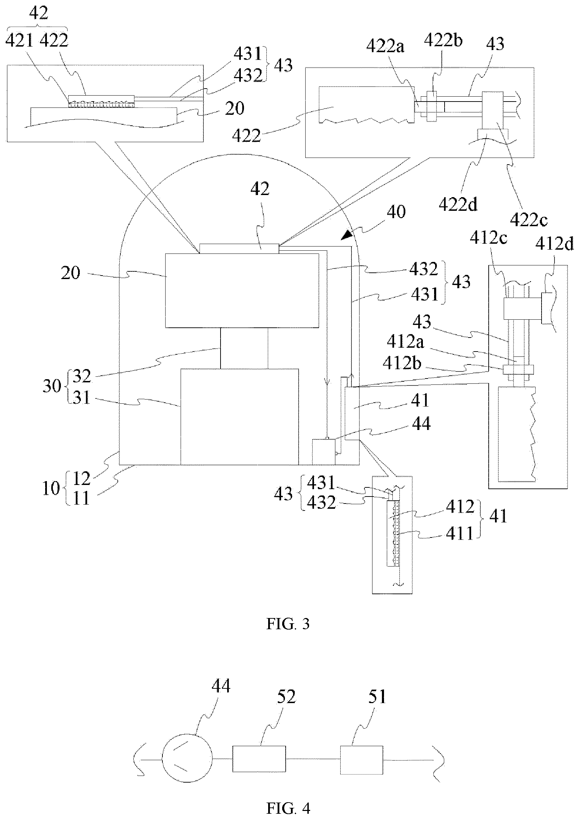

FIG. 3 is a schematic diagram of a first example structure of the camera shown in FIG. 1. Referring to FIG. 3, in the first example, the first heat exchange part 41 may include a first thermally conductive interface layer 411 attached to the casing 10, and a first heat exchanger 412 assembled with the first thermally conductive interface layer 411 in a thermally conductive manner.

In one embodiment, the thermally conductive assembling between the first heat exchanger 412 and the first thermally conductive interface layer 411 may adopt complementary tooth-like or corrugated thermally conductive surfaces to achieve thermally conductive contact.

The second heat exchange part 42 may include a second thermally conductive interface layer 421 attached to the heating element 20, and a second heat exchanger 422 assembled with the second thermally conductive interface layer 421 in a thermally conductive manner.

In one embodiment, the thermally conductive assembling between the second heat exchanger 422 and the second thermally conductive interface layer 421 may adopt complementary tooth-like or corrugated thermally conductive surfaces to achieve thermally conductive contact.

The purpose of achieving thermally conductive contact through complementary tooth-like or corrugated thermally conductive surfaces mentioned above is to further enhance the heat exchange effect by increasing the effective contact heat exchange area. That is, for the heat exchangers of the same size, the tooth-like or corrugated thermally conductive surfaces can increase the effective contact heat exchange area by about 40%.

It can be understood that the thermally conductive assembling between the first heat exchanger 412 and the first thermally conductive interface layer 411, as well as the thermally conductive assembling between the second heat exchanger 422 and the second thermally conductive interface layer 421 can also adopt flat thermally conductive surfaces to achieve thermally conductive contact.

In one embodiment, the flexible liquid flow pipeline 43 may be butted with the pipe interfaces of the first heat exchanger 412 and the second heat exchanger 422. For example, referring to FIG. 3, the two ends of the flexible liquid flow pipeline 43 can be connected with a first pipe interface 412a of the first heat exchanger 412 and a second pipe interface 422a of the second heat exchanger 422 respectively.

For example, a liquid inlet end of the upstream flexible pipe 431 of the flexible liquid flow pipeline 43 may be communicated with the outlet interfaces of a pair of first pipe interfaces 412a of the first heat exchanger 412, and a liquid outlet end of the upstream flexible pipe 431 of the flexible liquid flow pipeline 43 can be communicated with the inlet interfaces of a pair of second pipe interfaces 422a of the second heat exchanger 422. A liquid inlet end of the downstream flexible pipe 432 of the flexible liquid flow pipeline 43 can be communicated with the outlet interfaces of a pair of second pipe interfaces 422a of the second heat exchanger 422, and a liquid outlet end of the downstream flexible pipe 432 of the flexible liquid flow pipeline 43 can be communicated with the inlet interfaces of a pair of first pipe interface 412a of the first heat exchanger 412 through the liquid supply driving element 44.

In one embodiment, the flexible liquid flow pipeline 43 can be fastened to the pipe interfaces of the first heat exchanger 412 and/or the second heat exchanger 422 through a rigid clamp, and the flexible liquid flow pipeline 43 can also be restrained through a flexible clamp having a preset distance from the rigid clamp.

Specifically, referring to FIG. 3, when the flexible liquid flow pipeline 43 is fastened to the first pipe interface 412a (including the inlet interfaces and the outlet interfaces) of the first heat exchanger 412 through a first rigid clamp fastener 412b, the flexible liquid flow pipeline 43 can also be restrained through the first flexible clamp 412c having a preset distance from the first rigid clamp 412b. For example, the first flexible clamp 412c can be fixedly installed on the casing 10 (such as casing cover 12) through a first clamp bracket 412d.
when the flexible liquid flow pipeline 43 is fastened to the second pipe interface 422a (including the inlet interfaces and the outlet interfaces) of the second heat exchanger 422 through a second rigid clamp 422b, the flexible liquid flow pipeline 43 can also be restrained through the second flexible clamp 422c having a preset distance from the second rigid clamp 422b. For example, the second flexible clamp 422c can be fixedly installed on the heating element 20 through a second clamp bracket 422d.

The structure restrained by the flexible clamp can reduce the wear of the butting between the flexible liquid flow pipeline 43, the pipe interfaces of the first heat exchanger 412 and/or the second heat exchanger 422.

That is, the first pipe interface 412a of the first heat exchanger 412, the second pipe interface 422a of the second heat exchanger 422, and the first rigid clamp 412b and the second rigid clamp 422b can be made of hard materials such as metal. The flexible liquid flow pipeline 43 can be made of a soft material with relatively low hardness, such as plastic and rubber. Therefore, the bending deformation of the flexible liquid flow pipeline 43 in response to the change in the relative position between the heating element 20 and the casing 10 will be transmitted to the butting ends between the flexible liquid flow pipeline 43 and the first and second pipe interfaces 412a and 422a, and will cause friction of the hard material at the butt end of the flexible liquid flow pipeline 43, thereby leading the wear of the butt end of the flexible flow pipeline 43 with relatively low hardness .

However, if a flexible clamp is added and used to restrain the flexible liquid flow pipeline 43, the friction generated by the flexible liquid flow pipeline 43 due to bending deformation will be more concentrated at the first flexible clamp 412c and/or the second flexible clamp 422c, and thus the deformation and friction degree of the butt end between the flexible liquid flow pipeline 43 and the first pipe interface 412a and the second pipe interface 422a is weakened, so that the service life of the flexible liquid flow pipeline 43 can be improved.

In the first example, the start-stop status and operating rotation speed of the liquid supply driving element 44 can be electrically controlled or temperature-controlled.

In the electronic control mode, the start-stop status and operating rotation speed of the liquid supply driving element 44 can be controlled by a processor in the camera. For example, the processor can control the start-stop status and operating rotation speed of the liquid supply driving element 44 according to the logic conditions shown in Table 1:

**Table 1**

| detected temperature in casing 10 (°C) | less than the first temperature T1 | in the temperature range from the first temperature T1 to the second temperature T2 | greater than the second temperature T2 |
|---|---|---|---|
| status of the liquid supply driving element 44 | stop | operating at a first rotation speed W1 | operating at a second rotation speed W2 |

Herein, the first temperature T1 may be less than the second temperature T2. For example, the first temperature T1 may be set to 5°C, and the second temperature T2 may be set to 50°C. Moreover, the first rotation speed W1 may be less than the second rotation speed W2. For example, the first rotation speed W1 may be set to 60% of the rated rotation speed of the liquid supply driving element 44, and the second rotation speed W2 may be set to 100% of the rated rotation speed of the liquid supply driving element 44.

FIG. 4 is a schematic diagram of an example of an electrical architecture suitable for the first example structure shown in FIG. 3. The temperature control mode can refer to FIG. 4. A thermosensitive switch element 51 (such as a temperature jump switch) and a thermosensitive current limiting element 52 (such as a thermistor) can be connected in series between the liquid supply driving element 44 and the power supply of the camera.

Herein, the thermosensitive switch element 51 can automatically turn on or cut off the path between the liquid supply driving element 44 and the power supply of the camera in response to the temperature in the casing 10 reaching a predetermined threshold, and the thermosensitive current limiting element 52 can change the resistance value in response to the temperature change in the casing 10 to form a variable resistance for changing the current in the path between the liquid supply driving element 44 and the power supply of the camera.

Compared with the electric control mode, the temperature control mode shown in FIG. 4 can save the software programs and peripheral loops set for realizing the control logic of the processor, and can reduce the processing burden of the processor. Thus, the control reliability of the liquid supply driving element 44 can be improved.

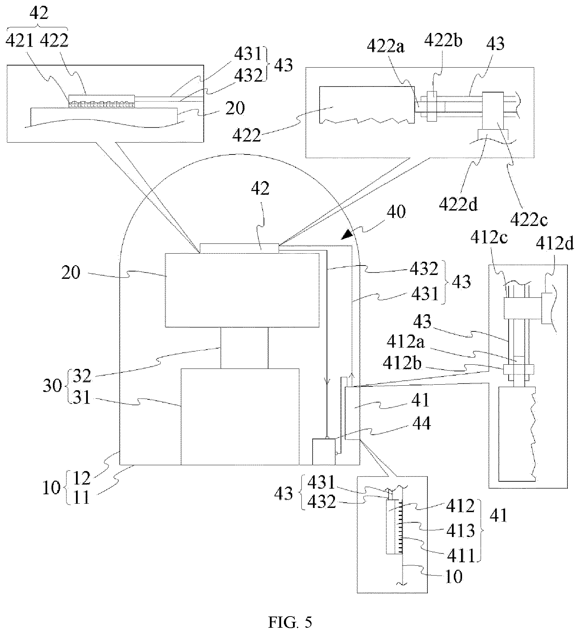

FIG. 5 is a diagram of a second example structure of the camera shown in FIG. 1. Referring to FIG. 5, in the second example:
the first heat exchange part 41 may include a first thermally conductive interface layer 411 attached to the casing 10 and a first heat exchanger 412 assembled with the first thermally conductive interface layer 411 in a thermally conductive manner.

In one embodiment, the thermally conductive assembling of the first heat exchanger 412 and the first thermally conductive interface layer 411 can be realized by means of a Peltier element 413. The Peltier element 413 is an element capable of forming by means of being powered up, the first temperature control surface and the second temperature control surface based on the Peltier effect, such as TEC, (Thermo Electric Cooler, semiconductor cooler).

The Peltier element 413 may be located between the first heat exchanger 412 and the first thermally conductive interface layer 411, wherein a first temperature control surface of the Peltier element 413 may be in thermally conductive contact with the first heat exchanger 412, and a second temperature control surface of the Peltier element 413 can be in thermally conductive contact with the first thermal interface layer 411.

The heating and cooling modes of the first temperature control surface and the second temperature control surface of the Peltier element 413 can be switched. For example, the switching can be realized by changing the positive and negative of the input voltage of the Peltier element 413. Therefore, the Peltier element 413 enables the temperature control assembly 40 to support two temperature control modes of high temperature heat dissipation and low temperature heating at the same time. Thus, it can be applied to cameras whose application scene experiences large environmental temperature difference span (e.g. - 40 °C to 70 °C). At this time, antifreeze such as ethylene glycol can be further added to the liquid medium of the flexible heat exchange loop.

The second heat exchange part 42 may include a second thermally conductive interface layer 421 attached to the heating element 20, and a second heat exchanger 422 assembled with the second thermally conductive interface layer 421 in a thermally conductive manner, wherein the thermally conductive assembling of the second heat exchanger 422 and the second thermally conductive interface layer 421 can adopt complementary tooth-like or corrugated thermally conductive surfaces to achieve a thermally conductive contact.

The purpose of achieving thermally conductive contact through complementary tooth-like or corrugated thermally conductive surfaces is to further enhance the heat transfer by increasing the effective contact heat exchange area. That is, for the heat exchangers of the same size, the tooth-like or corrugated thermally conductive surfaces can increase the effective contact heat exchange area by about 40%. However, it can be understood that the thermally conductive assembling between the second heat exchanger 422 and the second thermally conductive interface layer 421 can also adopt flat thermally conductive surfaces to achieve conductive contact.

In one embodiment, the flexible liquid flow pipeline 43 may be butted with the pipe interfaces of the first heat exchanger 412 and the second heat exchanger 422. For example, referring to FIG. 5, both ends of the flexible liquid flow pipeline 43 can be connected with the first pipe interface 412a of the first heat exchanger 412 and the second pipe interface 422a of the second heat exchanger 422 respectively.

For example, the liquid inlet end of the upstream flexible pipe 431 of the flexible liquid flow pipeline 43 may be communicated with the outlet interfaces of a pair of first pipe interfaces 412a of the first heat exchanger 412, and the liquid outlet end of the upstream flexible pipe 431 of the flexible liquid flow pipeline 43 may be communicated with the inlet interfaces of a pair of second pipe interfaces 422a of the second heat exchanger 422; the liquid inlet end of the downstream flexible pipe 432 of the flexible liquid flow pipeline 43 can be communicated with the outlet interfaces of a pair of second pipe interfaces 422a of the second heat exchanger 422, and the liquid outlet end of the downstream flexible pipe 432 of the flexible liquid flow pipeline 43 can be communicated with the inlet interfaces of a pair of first pipe interfaces 412a of the first heat exchanger 412 through the liquid supply driving element 44.

In one embodiment, the flexible liquid flow pipeline 43 can be fastened to the pipe interfaces of the first heat exchanger 412 and/or the second heat exchanger 422 through a rigid clamp, and the flexible liquid flow pipeline 43 can also be restrained through a flexible clamp having a preset distance from the rigid clamp. Herein, the flexible liquid flow pipeline 43 can be butted with the pipe interfaces through the rigid clamp and restrained through the flexible clamp in the same way as in the first example shown in FIG. 3, which will not be repeated here.

Similar to the first example, in the second example, the start-stop status and operating rotation speed of the liquid supply driving element 44 can be electrically controlled or temperature-controlled. Compared with the Peltier element 413 further included in the first example, its start-stop status and operating mode can be electrically controlled, that is, the start-stop status and operating mode of the Peltier element 413 can be controlled by the processor in the camera.

If the start-stop status and operating rotation speed of the liquid supply driving element 44 and the start-stop status and operating mode of the Peltier element 413 are controlled by the processor in the camera at the same time, the processor can control the start-stop status and operating rotation speed of the liquid supply driving element 44 and the start-stop status and operating mode of the Peltier element 413 according to the logic conditions shown in Table 2:

**Table 2**

| detected temperature in casing 10 (°C) | less than the third temperature T3 | in the temperature range from the third temperature T3 to the first temperature T1 | in the temperature range from the first temperature T1 to the second temperature T2 | greater than the second temperature T2 |
|---|---|---|---|---|
| status of the liquid supply driving element 44 | operating at a second rotation speed W2 | stop | operating at a first rotation speed W1 | operating at a second rotation speed W2 |
| status of Peltier element 413 | heating mode in which the first temperature control surface heating and the second temperature control surface cooling | turned off | turned off | cooling mode in which the first temperature control surface cooling and the second temperature control surface heating |

Herein the third temperature T3 can be less than the first temperature T1, and the first temperature T1 may be less than the second temperature T2. For example, the third temperature T3 may be set to - 15 °C, the first temperature T1 may be set to 5 °C, and the second temperature T2 may be set to 50 °C. Moreover, the first rotation speed W1 may be less than the second rotation speed W2. For example, the first rotation speed W1 may be set to 60% of the rated rotation speed of the liquid supply driving element 44, and the second rotation speed W2 may be set to 100% of the rated rotation speed of the liquid supply driving element 44.

As an alternative, the processor can also control the start-stop status and operating rotation speed of the liquid supply driving element 44 and the start-stop status and operating mode of the Peltier element 413 according to the logic conditions shown in Table 3:

**Table 3**

| detected temperature in casing 10 (°C) | less than the fourth temperature T4 | in the temperature range from the fourth temperature T4 to the fifth temperature T5 | greater than the fifth temperature T5 |
|---|---|---|---|
| status of the liquid supply driving element 44 | operating at a second rotation speed W2 | operating at a first rotation speed W1 | operating at a second rotation speed W2 |
| status of Peltier element 413 | heating mode in which the first temperature control surface heating and the second temperature control surface cooling | any of the heating and cooling modes | heating mode in which the first temperature control surface cooling and the second temperature control surface heating |

Herein the fourth temperature T4 may be less than the fifth temperature T5. For example, the fourth temperature T4 may be set to 43°C, and the fifth temperature T5 may be set to 47°C. In addition, the first rotation speed W1 may be less than the second rotation speed W2. For example, the first rotation speed W1 may be set to 60% of the rated rotation speed of the liquid supply driving element 44, and the second rotation speed W2 may be set to 100% of the rated rotation speed of the liquid supply driving element 44.

Compared with the logic conditions shown in Table 2, the logic conditions shown in Table 3 can achieve the constant temperature control.

If the start-stop status and the operating rotation speed of the liquid supply driving element 44 are temperature-controlled, the electrical architecture shown in FIG. 4 can also be applied to the second example. At this time, the logic conditions under which the processor performs control may not be limited to the logic conditions for the liquid supply driving element 44 as shown in Tables 2 and 3.

The above are only preferred embodiments of the present invention, and are not intended to limit the present invention.

## Claims

1. A camera comprising:
a casing (10) made of metal;
a heating element (20) arranged inside the casing (10); and
a temperature control assembly (40) comprising:
a first heat exchange part (41), which is attached to the casing (10) and which is in thermally conductive contact with the casing (10);
a second heat exchange part (42), which is attached to the heating element (20) and which is in thermally conductive contact with the heating element (20);
a flexible liquid flow pipeline (43), which forms a flexible heat exchange loop taking the first heat exchange part (41) and the second heat exchange part (42) as series nodes, and has a redundant length for providing a deformation allowance for the flexible heat exchange loop; wherein the deformation allowance allows the flexible heat exchange loop to bend in response to a change in a relative position between the heating element (20) and the casing (10) caused by rotation of the heating element (20), to avoid hindering of relative rotation between the heating element (20) and the casing (10) by the flexible heat exchange loop; and
a liquid supply driving element (44), which is connected in series in the flexible heat exchange loop;
wherein, heat of the second heat exchange part (42) is conducted to the first heat exchange part (41) via the liquid flow inside the flexible liquid flow pipeline (43), so that the heat generated by the heating element (20) is conducted to the casing (10).

2. The camera of claim 1, wherein the heating element (20) is an imaging component of the camera.

3. The camera of claim 2, wherein,
the first heat exchange part (41) comprises a first thermally conductive interface layer (411) and a first heat exchanger (412), wherein the first thermally conductive interface layer (411) is in thermally conductive contact with the casing (10), and the first heat exchanger (412) is assembled with the first thermally conductive interface layer (411) in a thermally conductive manner;
the second heat exchange part (42) comprises a second thermally conductive interface layer (421) and a second heat exchanger (422), wherein the second thermally conductive interface layer (421) is in thermally conductive contact with the heating element (20), and the second heat exchanger (422) is assembled with the second thermally conductive interface layer (421) in a thermally conductive manner.

4. The camera of claim 3, wherein
the first heat exchanger (412) and the first thermally conductive interface layer (411) produce the thermally conductive assembly through complementary tooth-like or corrugated thermally conductive surfaces; and
the second heat exchanger (422) and the second thermally conductive interface layer (421) produce the thermally conductive contact through complementary tooth-like or corrugated thermally conductive surfaces.

5. The camera of claim 4, wherein pipe interfaces of the first heat exchanger (412) and the second heat exchanger (422) are fastened to the flexible liquid flow pipeline (43) through a rigid clamp.

6. The camera of claim 5, wherein the flexible liquid flow pipeline (43) is restrained through a flexible clamp having a preset distance from the rigid clamp.

7. The camera of claim 5, wherein the first heat exchange part (41) comprises a Peltier element (413), and the Peltier element (413) is located between the first heat exchanger (412) and the first thermally conductive interface layer (411).

8. The camera of claim 7, wherein the first heat exchanger (412) is in thermally conductive contact with a first temperature control surface of the Peltier element (413), and the first thermally conductive interface layer (411) is in thermally conductive contact with a second temperature control surface of the Peltier element (413).

9. The camera of claim 8, wherein control of a start-stop status and an operating rotation speed of the liquid supply driving element (44) is based on a current value or a temperature value.

10. The camera of claim 9, wherein the liquid supply driving element (44) is configured to be:
in a stop status when a detected temperature in the casing (10) is less than a first temperature;
in a second rotation speed status when the detected temperature in the casing (10) is greater than a second temperature; and
in a first rotation speed status when the detected temperature in the casing (10) is in a temperature range from the first temperature to the second temperature;
wherein the first temperature is less than the second temperature, and the first rotation speed is less than the second rotation speed.

11. The camera of claim 10, wherein the casing (10) comprises a casing base (11) and a casing cover (12) installed above the casing base (11), the heating element (20) is supported by the casing base (11), and the first heat exchange part (41) is in thermally conductive contact with the casing cover (12).

12. The camera of claim 11, wherein a thermosensitive switch element (51) and a thermosensitive current limiting element (52) are connected in series between the liquid supply driving element (44) and a power supply of the camera.

13. The camera of claim 12, wherein the thermosensitive current limiting element (52) comprises a temperature-sensitive resistor, so that the temperature-sensitive resistor has a resistance value changed according to the heat generated by the heating element (20), to control a rotation speed of the liquid supply driving element (44).

## Patentansprüche

1. Kamera, aufweisend:
ein Gehäuse (10), das aus Metall gefertigt ist;
ein Erwärmungselement (20), das im Inneren des Gehäuses (10) angeordnet ist; und
eine Temperatursteuerungsbaugruppe (40), aufweisend:
einen ersten Wärmeaustauschabschnitt (41), der am Gehäuse (10) angebracht ist und mit dem Gehäuse (10) in wärmeleitendem Kontakt steht;
einen zweiten Wärmeaustauschabschnitt (42), der am Erwärmungselement (20) angebracht ist und mit dem Erwärmungselement (20) in wärmeleitendem Kontakt steht;
eine flexible Flüssigkeitsströmungsleitung (43), die einen flexiblen Wärmeaustauschkreis bildet, wobei der erste Wärmeaustauschabschnitt (41) und der zweite Wärmeaustauschabschnitt (42) als Reihenknoten verwendet werden, und die eine redundante Länge zum Bereitstellen einer Verformungstoleranz für den flexiblen Wärmeaustauschkreis hat; wobei die Verformungstoleranz es dem flexiblen Wärmeaustauschkreis ermöglicht, im Ansprechen auf eine durch eine Drehung des Erwärmungselements (20) verursachte Änderung einer Relativposition zwischen dem Erwärmungselement (20) und dem Gehäuse (10) nachzugeben, um eine Behinderung einer Relativdrehung zwischen dem Erwärmungselement (20) und dem Gehäuse (10) durch den flexiblen Wärmeaustauschkreis zu vermeiden; und
ein Flüssigkeitsversorgungs-Antriebselement (44), das in dem flexiblen Wärmeaustauschkreis in Reihe geschaltet ist;
wobei eine Wärme des zweiten Wärmeaustauschabschnitts (42) über die Flüssigkeitsströmung im Inneren der flexiblen Flüssigkeitsströmungsleitung (43) zum ersten Wärmeaustauschabschnitt (41) befördert wird, so dass die vom Erwärmungselement (20) erzeugte Wärme zum Gehäuse (10) befördert wird.

2. Kamera nach Anspruch 1, wobei es sich bei dem Erwärmungselement (20) um eine Bildgebungskomponente der Kamera handelt.

3. Kamera nach Anspruch 2, wobei
der erste Wärmeaustauschabschnitt (41) eine erste wärmeleitende Grenzflächenschicht (411) und einen ersten Wärmetauscher (412) aufweist, wobei die erste wärmeleitende Grenzflächenschicht (411) mit dem Gehäuse (10) in wärmeleitendem Kontakt steht und der erste Wärmetauscher (412) mit der ersten wärmeleitenden Grenzflächenschicht (411) in einer wärmeleitenden Weise zusammengefügt ist;
der zweite Wärmeaustauschabschnitt (42) eine zweite wärmeleitende Grenzflächenschicht (421) und einen zweiten Wärmetauscher (422) aufweist, wobei die zweite wärmeleitende Grenzflächenschicht (421) mit dem Erwärmungselement (20) in wärmeleitendem Kontakt steht und der zweite Wärmetauscher (422) mit der zweiten wärmeleitenden Grenzflächenschicht (421) in einer wärmeleitenden Weise zusammengefügt ist.

4. Kamera nach Anspruch 3, wobei
der erste Wärmetauscher (412) und die erste wärmeleitende Grenzflächenschicht (411) die wärmeleitende Baugruppe durch komplementäre zahnähnliche oder geriffelte wärmeleitende Oberflächen erzeugen; und
der zweite Wärmetauscher (422) und die zweite wärmeleitende Grenzflächenschicht (421) den wärmeleitenden Kontakt durch komplementäre zahnähnliche oder geriffelte wärmeleitende Oberflächen erzeugen.

5. Kamera nach Anspruch 4, wobei Rohrgrenzflächen des ersten Wärmetauschers (412) und zweiten Wärmetauschers (422) durch eine starre Schelle an der flexiblen Flüssigkeitsströmungsleitung (43) befestigt sind.

6. Kamera nach Anspruch 5, wobei die flexible Flüssigkeitsströmungsleitung (43) durch eine flexible Schelle gehalten ist, die einen voreingestellten Abstand von der starren Schelle hat.

7. Kamera nach Anspruch 5, wobei der erste Wärmeaustauschabschnitt (41) ein Peltier-Element (413) aufweist, das sich zwischen dem ersten Wärmetauscher (412) und der ersten wärmeleitenden Grenzflächenschicht (411) befindet.

8. Kamera nach Anspruch 7, wobei der erste Wärmetauscher (412) mit einer ersten Temperatursteuerungsfläche des Peltier-Elements (413) in wärmeleitendem Kontakt steht und die erste wärmeleitende Grenzflächenschicht (411) mit einer zweiten Temperatursteuerungsfläche des Peltier-Elements (413) in wärmeleitendem Kontakt steht.

9. Kamera nach Anspruch 8, wobei die Steuerung eines Start-Stopp-Zustandes und einer Betriebsdrehzahl des Flüssigkeitsversorgungs-Antriebselements (44) auf einem Stromwert oder einem Temperaturwert beruht.

10. Kamera nach Anspruch 9, wobei das Flüssigkeitsversorgungs-Antriebselement (44) dafür ausgelegt ist, sich
in einem Stopp-Zustand zu befinden, wenn eine erfasste Temperatur in dem Gehäuse (10) niedriger als eine erste Temperatur ist;
in einem zweiten Drehzahlzustand zu befinden, wenn die erfasste Temperatur in dem Gehäuse (10) größer als eine zweite Temperatur ist; und
in einem ersten Drehzahlzustand zu befinden, wenn die erfasste Temperatur in dem Gehäuse (10) in einem Temperaturbereich von der ersten Temperatur zur zweiten Temperatur liegt;
wobei die erste Temperatur niedriger als die zweite Temperatur und die erste Drehzahl niedriger als die zweite Drehzahl ist.

11. Kamera nach Anspruch 10, wobei das Gehäuse (10) einen Gehäusesockel (11) und eine Gehäusehülle (12) aufweist, die über dem Gehäusesockel (11) installiert ist, wobei das Erwärmungselement (20) durch den Gehäusesockel (11) gestützt ist und der erste Wärmeaustauschabschnitt (41) mit der Gehäusehülle (12) in wärmeleitendem Kontakt steht.

12. Kamera nach Anspruch 11, wobei ein wärmeempfindliches Schaltelement (51) und ein wärmeempfindliches Strombegrenzungselement (52) zwischen dem Flüssigkeitsversorgungs-Antriebselement (44) und einer Stromversorgung der Kamera in Reihe geschaltet sind.

13. Kamera nach Anspruch 12, wobei das wärmeempfindliche Strombegrenzungselement (52) einen temperaturempfindlichen Widerstand aufweist, so dass der temperaturempfindliche Widerstand einen Widerstandswert hat, der sich entsprechend der vom Erwärmungselement (20) erzeugten Wärme ändert, um eine Drehzahl des Flüssigkeitsversorgungs-Antriebselements (44) zu steuern.

## Revendications

1. Caméra, comprenant :
un boîtier (10) en métal ;
un élément chauffant (20) disposé à l'intérieur du boîtier (10) ; et
un ensemble de contrôle de la température (40), comprenant :
une première section d'échange de chaleur (41) montée sur le boîtier (10) et en contact de conduction thermique avec le boîtier (10) ;
une deuxième section d'échange de chaleur (42) montée sur l'élément chauffant (20) et en contact de conduction thermique avec l'élément chauffant (20) ;
un conduit flexible d'écoulement de liquide (43) formant un circuit flexible d'échange de chaleur, la première section d'échange de chaleur (41) et la deuxième section d'échange de chaleur (42) étant utilisées comme noeuds en série, et ayant une longueur redondante pour fournir une tolérance de déformation au circuit flexible d'échange de chaleur ; sachant que la tolérance de déformation permet au circuit flexible d'échange de chaleur de céder en réponse à un changement de position relative entre l'élément chauffant (20) et le boîtier (10) provoqué par une rotation de l'élément chauffant (20) afin d'éviter une obstruction d'une rotation relative entre l'élément chauffant (20) et le boîtier (10) par le circuit flexible d'échange de chaleur ; et
un élément d'entraînement d'alimentation en liquide (44) connecté en série dans le circuit flexible d'échange de chaleur ;
sachant qu'une chaleur de la deuxième section d'échange de chaleur (42) est transportée vers la première section d'échange de chaleur (41) par l'intermédiaire de l'écoulement de liquide à l'intérieur du conduit flexible d'écoulement de liquide (43), de sorte que la chaleur générée par l'élément chauffant (20) est transportée vers le boîtier (10).

2. La caméra selon la revendication 1, sachant que l'élément chauffant (20) est un composant d'imagerie de la caméra.

3. La caméra selon la revendication 2, sachant que
la première section d'échange de chaleur (41) comprend une première couche d'interface conductrice de chaleur (411) et un premier échangeur de chaleur (412), la première couche d'interface conductrice de chaleur (411) étant en contact de conduction thermique avec le boîtier (10) et le premier échangeur de chaleur (412) étant assemblé à la première couche d'interface conductrice de chaleur (411) d'une manière conduisant la chaleur ;
la deuxième section d'échange de chaleur (42) comprend une deuxième couche d'interface conductrice de chaleur (421) et un deuxième échangeur de chaleur (422), la deuxième couche d'interface conductrice de chaleur (421) étant en contact de conduction thermique avec l'élément chauffant (20) et le deuxième échangeur de chaleur (422) étant assemblé à la deuxième couche d'interface conductrice de chaleur (421) d'une manière conduisant la chaleur.

4. La caméra selon la revendication 3, sachant que
le premier échangeur de chaleur (412) et la première couche d'interface conductrice de chaleur (411) créent l'assemblage conductrice de chaleur par des surfaces conductrices de chaleur complémentaires de type denté ou strié ; et
le deuxième échangeur de chaleur (422) et la deuxième couche d'interface conductrice de chaleur (421) créent le contact de conduction thermique par des surfaces conductrices de chaleur complémentaires de type denté ou strié.

5. La caméra selon la revendication 4, sachant que des interfaces tubulaires du premier échangeur de chaleur (412) et du deuxième échangeur de chaleur (422) sont fixées au conduit flexible d'écoulement de liquide (43) par un collier rigide.

6. La caméra selon la revendication 5, sachant que le conduit flexible d'écoulement de liquide (43) est maintenu par un collier flexible qui est à une distance préréglée du collier rigide.

7. La caméra selon la revendication 5, sachant que la première section d'échange de chaleur (41) comprend un élément Peltier (413) situé entre le premier échangeur de chaleur (412) et la première couche d'interface conductrice de chaleur (411).

8. La caméra selon la revendication 7, sachant que le premier échangeur de chaleur (412) est en contact de conduction thermique avec une première surface de contrôle de température de l'élément Peltier (413) et la première couche d'interface conductrice de chaleur (411) est en contact de conduction thermique avec une deuxième surface de contrôle de température de l'élément Peltier (413).

9. La caméra selon la revendication 8, sachant que la commande d'un état de démarrage/arrêt et d'une vitesse de fonctionnement de l'élément d'entraînement d'alimentation en liquide (44) est basée sur une valeur de courant ou une valeur de température.

10. La caméra selon la revendication 9, sachant que l'élément d'entraînement d'alimentation en liquide (44) est conçu pour être
dans un état d'arrêt lorsqu'une température détectée dans le boîtier (10) est inférieure à une première température ;
dans un deuxième état de vitesse de rotation lorsque la température détectée dans le boîtier (10) est supérieure à une deuxième température ; et
dans un premier état de vitesse de rotation lorsque la température détectée dans le boîtier (10) se situe dans une plage de températures allant de la première température à la deuxième température ;
sachant que la première température est inférieure à la deuxième température et la première vitesse de rotation est inférieure à la deuxième vitesse de rotation.

11. La caméra selon la revendication 10, sachant que le boîtier (10) comprend une base de boîtier (11) et une enveloppe de boîtier (12) installée au-dessus de la base de boîtier (11), sachant que l'élément chauffant (20) est supporté par la base de boîtier (11) et la première section d'échange de chaleur (41) est en contact de conduction thermique avec l'enveloppe de boîtier (12).

12. La caméra selon la revendication 11, sachant qu'un élément de commutation thermosensible (51) et un élément de limitation de courant thermosensible (52) sont connectés en série entre l'élément d'entraînement d'alimentation en liquide (44) et une alimentation électrique de la caméra.

13. La caméra selon la revendication 12, sachant que l'élément de limitation de courant thermosensible (52) comprend une résistance sensible à la température, de sorte que la résistance sensible à la température a une valeur de résistance qui varie en fonction de la chaleur générée par l'élément chauffant (20) pour commander une vitesse de rotation de l'élément d'entraînement d'alimentation en liquide (44).
